# EUROPÄISCHE PATENTSCHRIFT

(11) **EP 3 919 429 B1**
(45) Veröffentlichungstag und Bekanntmachung des Hinweises auf die Patenterteilung: **31.07.2024**
(21) Anmeldenummer: 21172078.4
(22) Anmeldetag: 04.05.2021
(51) Int. Cl.: B66F 9/06, B66F 9/075, B66F 17/00, B60T 7/22, G01S 17/931, B60W 30/09, B60W 30/095, B60W 60/00, G01S 17/42, G01S 17/87, G05D 1/00

(54) **AUTOMATISIERTES FLURFÖRDERZEUG**
AUTOMATED INDUSTRIAL TRUCK
CHARIOT DE MANUTENTION AUTOMATISÉ

(30) Priorität: 27.05.2020 DE 102020114145; 04.06.2020 DE 102020114853
(43) Veröffentlichungstag der Anmeldung: 08.12.2021
(73) Patentinhaber: STILL GmbH, 22113 Hamburg (DE)
(72) Erfinder: Viereck, Volker, 23898 Kühsen (DE); Wittmann, Thomas, 21035 Hamburg (DE); Krüger-Basjmeleh, Tino, 25469 Halstenbek (DE)
(74) Vertreter: Patentship Patentanwaltgesellschaft

(56) Entgegenhaltungen:
- WO-A1-2008/146180
- WO-A1-2021/163479
- GB-A- 2 314 717
- US-A1- 2010 296 908

## Beschreibung

Die Erfindung betrifft ein automatisiertes Flurförderzeug mit einer Einrichtung zur Umgebungsüberwachung, die mindestens zwei am Flurförderzeug angeordnete, für eine Erfassung der Umgebung des Flurförderzeugs ausgebildete, jeweils in einer Abtastebene abtastende, insbesondere zeilenabtastende, Sensoren und eine, für eine Auswertung der Sensordaten ausgebildete, Datenverarbeitungseinrichtung umfasst.

Zum Transportieren von Lasten werden bei logistischen Prozessen, z.B. beim Be- und Entladen von Lastkraftwagen oder beim Warentransport in Produktionsanlagen, in jüngster Zeit häufig fahrerlose Transportfahrzeuge verwendet. Unter fahrerlosen Transportfahrzeugen (FTF, englisch: Automated Guided Vehicle, AGV) versteht man flurgebundene Förderfahrzeuge mit eigenem Fahrantrieb, die automatisiert gesteuert und berührungslos geführt werden. Die fahrerlosen Transportfahrzeuge werden mit den Lasten beladen oder nehmen die Lasten selbständig auf. Bei den Lasten handelt es sich meist um mit Waren beladene Paletten. Dabei können die Waren lose oder in Transportbehältnissen, z.B. Gitterboxen, auf den Paletten abgelegt sein. Die fahrerlosen Transportfahrzeuge können auch als Schlepper ausgebildet sein, die einen oder mehrere mit Lasten beladene Anhänger ziehen.

Fahrerlose Transportfahrzeuge sind heute zur Vermeidung von Unfällen mit Sensoren ausgestattet, die, wie Lasersensoren, den Fahrbereich berührungslos abtasten oder, wie Schaltleisten, einen geringe Kraft aufbringen und im Fall einer drohenden Kollision das Transportfahrzeug stoppen.

Auch automatisierte und somit fahrerlos betriebene Flurförderzeuge sind mit Personenschutzeinrichtungen auszustatten, um diese sicher betreiben zu können. Am stärksten verbreitet hierfür sind optische Laserscanner zum Personenschutz, mit welchen der Fahrbereich vor dem automatisierten Fahrzeug überwacht wird. Dazu werden sogenannte Schutzfelder definiert, welche bei "Verletzung" durch eine Person ein Notaussignal auslösen, worauf hin ein Sicherheitssystem des Fahrzeugs das Fahrzeug schnellstmöglich zum Stehen bringt.

Nach dem heutigen Stand der Technik gibt es nur bedingt geeignete Lösungen, um optisch arbeitende Personenschutzsysteme auch im Outdoor-Bereich (Außenbereich) und somit im Freien zu betreiben, da es aufgrund von Witterungserscheinungen, insbesondere bei Niederschlag von Regen oder Schnee, zu ungewollten Schutzfeldverletzungen kommt. Beispielsweise können Regentropfen vom Laserscanner erfasst werden. Ein Problem stellt vor allem Niederschlag dar, der auf den Boden auftrifft, von dort wieder hochspritzt und genau auf Höhe der Scanebene des Laserscanners seine Richtungsumkehr hat.

Ungewollt ausgelöste Sicherheitsstopps sind allerdings möglichst zu vermeiden, da diese zum einen einen drastischen Eingriff in die ansonsten sehr definierte und vorsichtige Fahrzeugführung bedeuten und zum anderen die Performance des automatisierten Flurförderzeugs dadurch stark sinkt.

Als Gegenmaßnahme können Mehrfachauswertungen der Sensorsignale vorgesehen werden, so dass die Detektion eines Hindernisses sich über mehrere Messungen bestätigen muss. Im ungünstigsten Fall kann es jedoch bis zu 16 Mehrfachauswertungen erfordern, um nicht versehentlich auf Niederschlag zu reagieren. Da eine derartige Mehrfachauswertung allerdings zu einer deutlich größeren Auswertezeit führt, wird dadurch die maximal mögliche Geschwindigkeit eines automatisierten Fahrzeugs drastisch beschränkt. Dies ist wirtschaftlich nicht akzeptabel und begrenzt die Attraktivität von automatischen Fahrzeugen im Außenbereich stark. Die WO 2021/163479 A1 offenbart einen Prozess zum Automatisieren einer standortbasierten Steuerung eines Flurförderzeugs.

Die US 2010/296908 A1 offenbart ein Betriebsverfahren eines industriellen automatischen Objekttransportsystems, das ein automatisiertes Fahrzeug mit einer Mehrzahl von Sensoren auf unterschiedlichen Höhen umfasst, um Hindernisse und Gegenstände in seiner Umgebung zu erfassen.

Die WO 2008/146180 A1 offenbart ein RFID-System an einer Hubvorrichtung eines Flurförderzeugs.

Der vorliegenden Erfindung liegt die Aufgabe zugrunde, ein automatisiertes Flurförderzeug der eingangs genannten Art so auszugestalten, dass auch im Außenbereich ein sicherer Betrieb ermöglicht wird.

Diese Aufgabe wird erfindungsgemäß dadurch gelöst, dass die Sensoren derart am Flurförderzeug angeordnet sind, dass die Abtastebenen der einzelnen Sensoren parallel zueinander auf unterschiedlichen Höhen liegen, und die Datenverarbeitungseinrichtung dazu eingerichtet ist, die Sensordaten der einzelnen Sensoren mittels einer rechnerisch-logischen Und-Verknüpfung zu verknüpfen und auszuwerten. Die rechnerische Und-Verknüpfung ist eine rechnerisch-logische Und-Verknüpfung. Vorteilhaft ist hierbei, die Sensordaten der einzelnen Sensoren mittels der rechnerischen Und-Verknüpfung zu einem gemeinsamen Sensorsignal zu verknüpfen und als verknüpftes Sensorsignal auszuwerten.

Der wesentliche Erfindungsgedanke besteht also darin, mindestens zwei, insbesondere optische, Sensoren als Sicherheitsscanner derart am Fahrzeug zu montieren, dass die Scanebenen parallel zu einander auf etwas unterschiedlichen Höhen liegen und die Signale der beiden Scanner mittels einer rechnerisch-logischen Und-Verknüpfung zu einem gemeinsamen Sensorsignal zu verknüpfen. Ein Sicherheitsstopp wird demnach erst dann ausgelöst, wenn beide Scanner zeitgleich ein relevantes Hindernis detektieren konnten. Die Wahrscheinlichkeit, dass es durch Niederschlag zu einem derartigen Ereignis kommt, ist deutlich reduziert, so dass eine notwendige Mehrfachauswertung deutlich reduziert werden kann und somit eine Reduzierung der Fahrgeschwindigkeit nicht erfolgen muss.

Um auch die Seitenbereiche des Flurförderzeugs zu erfassen, werden sehr häufig Flurförderzeuge mit jeweils zwei Sensoren ausgestattet, so dass die vorgeschlagene Lösung keinerlei Zusatzkosten bedeutet. Die Und-Verknüpfung kann innerhalb der ebenfalls in der Regel vorhandenen Sicherheitssteuerung durchgeführt werden.

Der Erfindung liegt dabei die Überlegung zugrunde, die jeweiligen Sensordaten der meist doppelt am Fahrzeug montierten Sensoren rechnerisch mit einer logischen Und-Verknüpfung zu verknüpfen. Versuche haben gezeigt, dass auf diese Weise mit übereinander gestellten Scannern beeindruckend gute Ergebnisse bei der Niederschlagsfilterung erzielt werden konnten.

Vorzugsweise ist die Datenverarbeitungseinrichtung dazu eingerichtet, eine Reaktionsfunktion auszulösen, wenn die Auswertung der rechnerisch-logischen Und-Verknüpfung der Sensordaten der Sensoren ergibt, dass die einzelnen Sensoren zeitgleich ein Objekt in derselben Richtung erfassen. Bevorzugt wird eine Reaktionsfunktion ausgelöst, wenn die Auswertung des verknüpften Sensorsignals ergibt, dass die einzelnen Sensoren zeitgleich ein Objekt in derselben Richtung erfassen.

Als Reaktionsfunktion kann beispielsweise eine Warnmeldung ausgegeben werden. Hierzu steht die Datenverarbeitungseinrichtung zweckmäßigerweise mit einer Warneinrichtung des Flurförderzeugs in Wirkverbindung, die dazu eingerichtet ist, als Reaktionsfunktion eine Warnmeldung auszugeben. Mit dieser Warnmeldung können beispielsweise Fahrer von herkömmlichen Flurförderzeugen, insbesondere Fahrer von Gabelstaplern, die auf das autonome Flurförderzeug zufahren, vor der Gefahr einer Kollision mit dem autonomen Flurförderzeug gewarnt werden.

Hierzu kann die Warneinrichtung vorteilhafterweise als optische Signalvorrichtung, insbesondere als Blinklichteinrichtung oder Rundumkennleuchte, ausgebildet sein.

Zusätzlich oder alternativ kann die Warneinrichtung auch als akustische Signalvorrichtung, insbesondere als Huptoneinrichtung oder Sirenentoneinrichtung, ausgebildet sein.

Gemäß einer besonders bevorzugten Ausgestaltung steht die Datenverarbeitungseinrichtung mit einer Steuerungseinrichtung des Flurförderzeugs in Wirkverbindung oder ist in eine Steuerungseinrichtung des Flurförderzeugs integriert, die dazu eingerichtet ist, als Reaktionsfunktion ein Anhalten des Flurförderzeugs zu bewirken. Ein Anhalten des Flurförderzeugs und somit ein Sicherheitsstopp wird somit erst dann ausgelöst, wenn beide Sensoren zeitgleich ein relevantes Hindernis detektieren.

Um eine mögliche Kollision auch dann zu verhindern, wenn weder die Ausgabe von Warnmeldungen, als auch das Anhalten des autonomen Flurförderzeugs hierfür ausreichen, ist in einer weiteren vorteilhaften Ausgestaltung vorgesehen, dass die Datenverarbeitungseinrichtung mit einer Steuerungseinrichtung des Flurförderzeugs in Wirkverbindung steht oder in eine Steuerungseinrichtung des Flurförderzeugs integriert ist, die dazu eingerichtet ist, als Reaktionsfunktion ein Ausweichen des Flurförderzeugs zu bewirken.

Dabei ist es sinnvoll, zu prüfen, ob der Ausweichweg auch frei von Hindernissen ist. Daher ist die Datenverarbeitungseinrichtung vorzugsweise dazu eingerichtet, aus den Sensordaten der Umgebungsüberwachung einen hindernisfreien Ausweichweg zu bestimmen.

Als Sensor für die Erfassung eines Objekts kommt gemäß einer vorteilhaften Ausführungsform der Erfindung ein Laserscanner in Frage. Laserscanner zeichnen sich allein schon durch ihre Bauart dadurch aus, dass sie in einer Abtastebene, nämlich der Scanebene, abtastend detektieren, also scannen.

Der Sensor kann alternativ auch als Radarsensor ausgebildet sein.

Der Sensor kann alternativ auch als Ultraschallsensor ausgebildet sein.

Der Sensor kann alternativ auch als Kamera ausgebildet sein.

Bei derartigen Sensoren ist durch die Ausgestaltung des Sensors selbst oder durch bauliche Vorkehrungen, beispielsweise durch Blendeinrichtungen, oder eine elektronische Einrichtung sicherzustellen, dass eine zeilenabtastende Funktion in einer Abtastebene ermöglicht wird.

Zweckmäßigerweise ist die Datenverarbeitungseinrichtung in eine Fahrzeugsteuerungseinrichtung oder in eine Sicherheitssteuerungseinrichtung oder in eine Automatisierungssteuerungseinrichtung oder in eine mindestens zwei dieser Einrichtungen umfassende Kombinationssteuerungseinrichtung des Flurförderzeugs integriert.

Gemäß einer besonders bevorzugten Weiterbildung des Erfindungsgedankens werden unterschiedliche Schutzfelder, die von den Sensoren überwacht werden sollen, definiert. Hierbei liegt die Erkenntnis zugrunde, dass die Probleme mit dem Niederschlag vorwiegend im etwas entfernteren Bereich in Fahrtrichtung vor dem Fahrzeug entstehen. Im Nahbereich vor dem Sensor treten diese Schwierigkeiten eher nicht auf. Eine Und-Verknüpfung der Sensordaten der Sensoren sollte insofern für Schutzfelder in Fahrtrichtung vor dem Fahrzeug realisiert werden, wobei die Auswertung der deutlich schmäleren Seitenfelder an den Seiten des Fahrzeugs keine Verdopplung der Scanebenen erfordert.

Zu diesem Zweck ist vorzugsweise vorgesehen, dass in der Datenverarbeitungseinrichtung von den Sensoren überwachte Schutzfelder in der Umgebung des Flurförderzeugs hinterlegt sind, wobei die Datenverarbeitungseinrichtung dazu eingerichtet ist, die Sensordaten der Sensoren, die die in Fahrtrichtung des Flurförderzeugs liegenden Schutzfelder überwachen, mittels der rechnerisch-logischen Und-Verknüpfung zu verknüpfen und auszuwerten, und die Sensordaten der Sensoren, die die seitlich des Flurförderzeugs liegenden Schutzfelder überwachen, als unverknüpfte Sensorsignale auszuwerten. Die Sensordaten der Sensoren, die die in Fahrtrichtung des Flurförderzeugs liegenden Schutzfelder überwachen, werden vorteilhafterweise zu einem gemeinsamen Sensorsignal verknüpft und als verknüpftes Sensorsignal ausgewertet.

In einer vorteilhaften Ausgestaltung der Erfindung sind die Sensoren in einer vertikalen Linie übereinander am Flurförderzeug angeordnet.

Eine alternative zweckmäßige Ausgestaltung sieht vor, dass die Sensoren nebeneinander in unterschiedlichen Höhen am Flurförderzeug angeordnet sind. Diese Variante bietet sich insbesondere in den Fällen an, in denen ohnehin mindestens zwei Sensoren an verschiedenen Stellen des Flurförderzeugs vorgesehen sind, um auch seitliche Umgebungsbereiche des Flurförderzeugs zu überwachen. Hier genügt es, die Sensoren in der Höhe leicht gegeneinander versetzt anzuordnen.

Die Sensoren können jeweils als Einzelsensoren ausgebildet sein, die jeweils eine einzelne Abtastebene aufweisen und getrennt voneinander am Flurförderzeug derart angebaut werden, dass die Abtastebenen der Einzelsensoren parallel zueinander auf unterschiedlichen Höhen liegen. Gemäß einer vorteilhaften Weiterbildung der Erfindung sind die Sensoren baulich zu einer Sensorbaueinheit zusammengefasst, die mehrere parallel zueinander angeordnete Abtastebenen aufweist. Die Sensoren sind somit in eine Sensorbaueinheit integriert, die eine der Anzahl der eingebauten Sensoren entsprechende Anzahl von parallel zueinander liegenden Abtastebenen aufweist. Eine derartige, mehrere Sensoren aufweisende Sensorbaueinheit kann in einfacher Weise an einem Flurförderzeug angebaut werden.

Der vertikale Abstand der Sensoren sollte einerseits so groß gewählt werden, dass Regentropfen getrennt detektiert werden können, und andererseits so klein gewählt werden, dass potentielle Hindernisse von den Sensoren gleichzeitig detektiert werden können. Zweckmäßigerweise ist daher vorgesehen, dass die Sensoren einen vertikalen Abstand voneinander von 0,01 bis maximal 0,2 m haben. Bevorzugt sind die Sensoren in vertikaler Richtung mit den Abtastebenen jeweils maximal 0,2m über einer Fahrbahnoberfläche am Flurförderzeug angeordnet. Dadurch können von den Sensoren Regentropfen getrennt detektiert werden und ein Sicherheitsstopp des Flurförderzeugs aufgrund von Regentropfen verhindert werden. Andererseits werden potentielle Hindernisse, beispielsweise eine auf der Fahrbahnoberfläche liegende Person, von den Sensoren gleichzeitig detektiert, um einen Sicherheitsstopp des Flurförderzeugs auszulösen.

Die Erfindung bietet eine deutliche Verbesserung der Funktion von Personenschutzanlagen beim Einsatz von automatisierten Fahrzeugen im Außenbereich. Insbesondere wird mit der Erfindung das Problem von Fehlauslösungen aufgrund von Niederschlag gelöst. Dies ist eine Folge aus der gleichzeitigen Bewertung unterschiedlicher Höhenlevel (durch die einzelnen Sensoren), unterschiedlicher Tastzeitpunkte und unterschiedlicher Blickwinkel, welche die Auftretenswahrscheinlichkeit von Störobjekten im verknüpften sicheren Sensorsignal auf Grund von Niederschlagseffekten sehr deutlich reduziert.

Weitere Vorteile und Einzelheiten der Erfindung werden anhand der in den schematischen Figuren dargestellten Ausführungsbeispiele näher erläutert. Hierbei zeigen
- Figur 1: ein Flurförderzeug mit zwei, in unterschiedlichen Höhen angebrachten, Sensoren in der Frontansicht,
- Figur 2: eine Detailansicht von zwei übereinander angeordneten Sensoren und
- Figur 3: eine Draufsicht auf ein Flurförderzeug mit umgebenden Schutzfeldern.

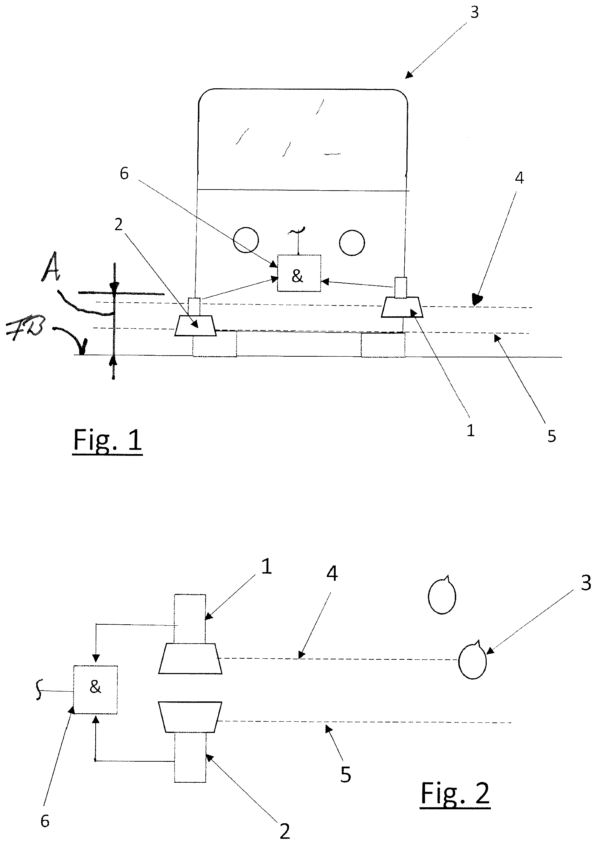

In der Figur 1 ist ein automatisiertes, fahrerlos betriebenes Flurförderzeug 3 in einer Frontansicht dargestellt. Das Flurförderzeug 3 ist beispielsweise als Schlepper ausgebildet. An den vorderen Eckbereichen des Flurförderzeugs 3 sind Sensoren 1 und 2 in unterschiedlichen Höhen montiert. Die Sensoren 1, 2 sind beispielsweise als Laserscanner ausgebildet. Die Abtastebenen 4 und 5 der Sensoren 1 und 2 sind parallel ausgerichtet, liegen aber in unterschiedlichen Höhen.

Die Figur 2 zeigt eine Detailansicht von zwei in einer vertikalen Linie direkt übereinander angeordneten, beispielsweise als Laserscanner ausgebildeten, Sensoren 1 und 2, die an einem nicht näher dargestellten automatisierten, fahrerlos betriebenen Flurförderzeug angeordnet sind. Die Abtastebenen 4 und 5 der Sensoren 1 und 2 sind ebenfalls parallel ausgerichtet und liegen in verschiedenen Höhen.

Die Sensoren 1, 2 in der Figur 2 können jeweils als Einzelsensoren ausgebildet sein, die jeweils eine einzelne Abtastebene 4 bzw. 5 aufweisen und getrennt voneinander am Flurförderzeug 3 derart angebaut sind, dass die Sensoren 1, 2 in einer vertikalen Linie direkt übereinander angeordnet sind, so dass die Abtastebenen 4, 5 der Einzelsensoren parallel zueinander auf unterschiedlichen Höhen liegen. Alternativ können die Sensoren 1, 2 baulich zu einer Sensorbaueinheit zusammengefasst sein, beispielsweise indem die Sensoren 1, 2 derart in ein gemeinsamen Sensorgehäuse eingebaut werden, dass die Sensorbaueinheit mehrere parallel zueinander angeordnete und auf unterschiedlichen Höhen liegende Abtastebenen 4, 5 aufweist.

Die Sensoren 1, 2 der Figuren 1 und 2 stehen für eine Auswertung der Sensordaten der Sensoren 1, 2 mit einer Datenverarbeitungseinrichtung 6 in Verbindung, die dazu eingerichtet ist, die Sensordaten der einzelnen Sensoren 1, 2 mittels einer rechnerisch-logischen Und-Verknüpfung in einem entsprechenden Logikbauelement zu verknüpfen und auszuwerten. Die Datenverarbeitungseinrichtung 6 ist weiterhin dazu eingerichtet, eine Reaktionsfunktion, beispielsweise ein Anhalten, des Flurförderzeugs 3, auszulösen, wenn die Auswertung der Und-Verknüpfung ergibt, dass die einzelnen Sensoren 1, 2 zeitgleich ein Objekt in derselben Richtung erfassen.

Mit der Und-Verknüpfung der Sensordaten der beiden Sensoren 1, 2 wird erreicht, dass ein Regentropfen 3 zum gleichen Zeitpunkt nur vom Sensor 1 erfasst wird, nicht aber vom Sensor 2. Größere Hindernisse, die den von beiden Abtastebenen 4, 5 umfassten Bereich abdecken, würden dagegen von beiden Sensoren 1 und 2 gleichzeitig erfasst. Durch eine entsprechende Auswertung in der Datenverarbeitungseinrichtung 6, die eine rechnerische Und-Verknüpfung der Sensordaten des Sensors 1 mit den Sensordaten des Sensors 2 umfasst, wird ermöglicht, dass Regentropfen 3 von tatsächlichen Hindernissen unterschieden werden können. Eine Reaktionsfunktion, insbesondere ein Notstopp des Flurförderzeugs 3, wird von der Datenverarbeitungseinrichtung 6 nur dann ausgelöst, wenn beide Sensoren 1 und 2 zeitgleich ein relevantes Hindernis detektieren.

Die Abtastebenen 4, 5 der Sensoren 1, 2 der Figuren 1 und 2 sind in vertikaler Richtung jeweils mit einem Abstand A von maximal 0,2m über einer Fahrbahnoberfläche FB am Flurförderzeug 3 angeordnet. Die Abtastebenen 4, 5 der beiden Sensoren 1, 2 weisen somit in vertikaler Richtung jeweils einen Abstand A von maximal 0,2m über der Fahrbahnoberfläche FB auf. Damit können auf der Fahrbahnoberfläche FB befindliche Hindernisse, beispielsweise eine auf der Fahrbahnoberfläche FB liegende Person, sicher von beiden Sensoren 1, 2 erkannt werden, um einen Sicherheitsstopp bzw. Notstopp des Flurförderzeugs 3 auszulösen.

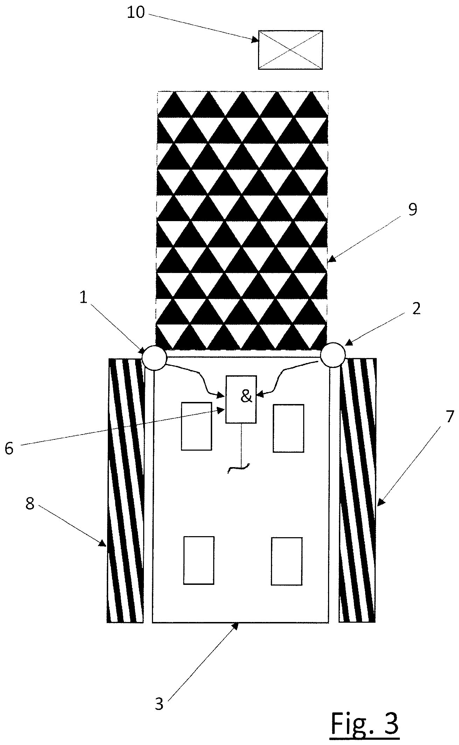

In der Figur 3 ist eine Draufsicht auf ein Flurförderzeug 3, beispielsweise ein Flurförderzeug 3 der Figur 1, mit umgebenden Schutzfeldern 7, 8 und 9, die von den Sensoren 1 und 2 überwacht werden sollen, dargestellt. Die Sensoren 1 und 2 sind als Laserscanner ausgebildet, die in unterschiedlichen Höhen an den vorderen Ecken des Flurförderzeugs 3 montiert sind.

Da die Probleme mit dem Niederschlag vorwiegend im etwas entfernteren Bereich vor dem Flurförderzeug 3 entstehen, wird in der Datenverarbeitungseinrichtung 6 eine rechnerische Und-Verknüpfung der Sensordaten der Sensoren 1 und 2 für das in Fahrtrichtung vor dem Flurförderzeug 3 liegende Schutzfeld 9 realisiert, das von beiden Sensoren 1, 2 überwacht wird. Im Nahbereich vor den Sensoren 1 und 2 treten diese Schwierigkeiten eher nicht auf, so dass die Auswertung der deutlich schmäleren Schutzfelder 7 und 8 an den Seiten des Flurförderzeug 3, wobei das Schutzfeld 7 nur von dem Sensor 7 und das Schutzfeld 8 nur von dem Sensor 1 überwacht wird, keine Und-Verknüpfung der Sensordaten der Sensoren 1 und 2 erfordert.

Eine Reaktionsfunktion, insbesondere ein Notstopp des Flurförderzeugs 3, wird von der Datenverarbeitungseinrichtung 6 nur ausgelöst, sobald beide Sensoren 1 und 2 zeitgleich ein relevantes Hindernis 10 detektieren, das sich in das Schutzfeld 9 hineinbewegt.

## Patentansprüche

1. Automatisiertes Flurförderzeug (3) mit einer Einrichtung zur Umgebungsüberwachung, die mindestens zwei am Flurförderzeug (3) angeordnete, für eine Erfassung der Umgebung des Flurförderzeugs (3) ausgebildete, jeweils in einer Abtastebene (4, 5) abtastende, insbesondere zeilenabtastende, Sensoren (1, 2) und eine, für eine Auswertung der Sensordaten ausgebildete, Datenverarbeitungseinrichtung (6) umfasst, **dadurch gekennzeichnet, dass** die Sensoren (1, 2) derart angeordnet sind, dass die Abtastebenen (4, 5) der einzelnen Sensoren (1, 2) parallel zueinander auf unterschiedlichen Höhen liegen, und die Datenverarbeitungseinrichtung (6) dazu eingerichtet ist, die Sensordaten der einzelnen Sensoren (1, 2) mittels einer rechnerisch-logischen Und-Verknüpfung zu verknüpfen und auszuwerten.

2. Flurförderzeug (3) nach Anspruch 1, **dadurch gekennzeichnet, dass** die Datenverarbeitungseinrichtung (6) dazu eingerichtet ist, eine Reaktionsfunktion auszulösen, wenn die Auswertung der rechnerisch-logischen Und-Verknüpfung der Sensordaten der Sensoren (1, 2) ergibt, dass die einzelnen Sensoren (1, 2) zeitgleich ein Objekt in derselben Richtung erfassen.

3. Flurförderzeug (3) nach Anspruch 2, **dadurch gekennzeichnet, dass** die Datenverarbeitungseinrichtung (6) mit einer Warneinrichtung des Flurförderzeugs (3) in Wirkverbindung steht, die dazu eingerichtet ist, als Reaktionsfunktion eine Warnmeldung auszugeben.

4. Flurförderzeug (3) nach Anspruch 3, **dadurch gekennzeichnet, dass** die Warneinrichtung als optische Signalvorrichtung, insbesondere als Blinklichteinrichtung oder Rundumkennleuchte, ausgebildet ist.

5. Flurförderzeug (3) nach Anspruch 3 oder 4, **dadurch gekennzeichnet, dass** die Warneinrichtung als akustische Signalvorrichtung, insbesondere als Huptoneinrichtung oder Sirenentoneinrichtung, ausgebildet ist.

6. Flurförderzeug (3) nach einem der Ansprüche 2 bis 5, **dadurch gekennzeichnet, dass** die Datenverarbeitungseinrichtung (6) mit einer Steuerungseinrichtung des Flurförderzeugs (3) in Wirkverbindung steht oder in eine Steuerungseinrichtung des Flurförderzeugs (3) integriert ist, die dazu eingerichtet ist, als Reaktionsfunktion ein Anhalten des Flurförderzeugs (3) zu bewirken.

7. Flurförderzeug (3) nach einem der Ansprüche 2 bis 6, **dadurch gekennzeichnet, dass** die Datenverarbeitungseinrichtung (6) mit einer Steuerungseinrichtung des Flurförderzeugs (3) in Wirkverbindung steht oder in eine Steuerungseinrichtung des Flurförderzeugs (3) integriert ist, die dazu eingerichtet ist, als Reaktionsfunktion ein Ausweichen des Flurförderzeugs (3) zu bewirken.

8. Flurförderzeug (3) nach einem der Ansprüche 1 bis 7, **dadurch gekennzeichnet, dass** die Sensoren (1, 2) als Laserscanner ausgebildet sind.

9. Flurförderzeug (3) nach einem der Ansprüche 1 bis 7, **dadurch gekennzeichnet, dass** die Sensoren (1, 2) als Radarsensoren ausgebildet sind.

10. Flurförderzeug (3) nach einem der Ansprüche 1 bis 7, **dadurch gekennzeichnet, dass** die Sensoren (1, 2) als Ultraschallsensoren ausgebildet sind.

11. Flurförderzeug (3) nach einem der Ansprüche 1 bis 7, **dadurch gekennzeichnet, dass** die Sensoren (1, 2) als Kameras ausgebildet sind.

12. Flurförderzeug (3) nach einem der Ansprüche 1 bis 11, **dadurch gekennzeichnet, dass** in der Datenverarbeitungseinrichtung (6) von den Sensoren (1, 2) überwachte Schutzfelder in der Umgebung des Flurförderzeugs (3) hinterlegt sind, wobei die Datenverarbeitungseinrichtung (6) dazu eingerichtet ist, die Sensordaten der Sensoren (1, 2), die die in Fahrtrichtung des Flurförderzeugs (3) liegenden Schutzfelder (9) überwachen, mittels der rechnerisch-logischen Und-Verknüpfung zu verknüpfen und auszuwerten, und die Sensordaten der Sensoren (1, 2), die die seitlich des Flurförderzeugs (3) liegenden Schutzfelder (7, 8) überwachen, als unverknüpfte Sensorsignale auszuwerten.

13. Flurförderzeug (3) nach einem der Ansprüche 1 bis 12, **dadurch gekennzeichnet, dass** die Sensoren (1, 2) in einer vertikalen Linie übereinander am Flurförderzeug (3) angeordnet sind.

14. Flurförderzeug (3) nach einem der Ansprüche 1 bis 12, **dadurch gekennzeichnet, dass** die Sensoren (1, 2) nebeneinander in unterschiedlichen Höhen am Flurförderzeug (3) angeordnet sind.

15. Flurförderzeug (3) nach einem der Ansprüche 1 bis 14, **dadurch gekennzeichnet, dass** die Sensoren (1, 2) baulich zu einer Sensorbaueinheit zusammengefasst sind, die mehrere parallel zueinander angeordnete Abtastebenen (4, 5) aufweist.

16. Flurförderzeug (3) nach einem der Ansprüche 1 bis 15, **dadurch gekennzeichnet, dass** die Sensoren (1, 2) einen vertikalen Abstand voneinander von 0,01 bis 0,2 m haben.

## Claims

1. Automated industrial truck (3) having a surroundings monitoring device that comprises at least two sensors (1, 2) that are arranged on the industrial truck (3), are designed to detect the surroundings of the industrial truck (3) and each carry out scanning, in particular line scanning, in a scanning plane (4, 5), and a data processing device (6) designed to evaluate the sensor data, **characterized in that** the sensors (1, 2) are arranged such that the scanning planes (4, 5) of the individual sensors (1, 2) are located parallel to one another at different heights, and the data processing device (6) is configured to link and evaluate the sensor data from the individual sensors (1, 2) by way of an arithmetic-logic AND link.

2. Industrial truck (3) according to Claim 1, **characterized in that** the data processing device (6) is configured to trigger a response function when the evaluation of the arithmetic-logic AND link between the sensor data from the sensors (1, 2) reveals that the individual sensors (1, 2) simultaneously detect an object in the same direction.

3. Industrial truck (3) according to Claim 2, **characterized in that** the data processing device (6) is operatively connected to a warning device of the industrial truck (3), the warning device being configured to output a warning message as response function.

4. Industrial truck (3) according to Claim 3, **characterized in that** the warning device is designed as an optical signalling apparatus, in particular as a flashing light or a rotating beacon.

5. Industrial truck (3) according to Claim 3 or 4, **characterized in that** the warning device is designed as an acoustic signalling apparatus, in particular as a horn or a siren.

6. Industrial truck (3) according to one of Claims 2 to 5, **characterized in that** the data processing device (6) is operatively connected to a control device of the industrial truck (3) or is integrated into a control device of the industrial truck (3), the control device being configured to bring about a stopping manoeuvre of the industrial truck (3) as response function.

7. Industrial truck (3) according to one of Claims 2 to 6, **characterized in that** the data processing device (6) is operatively connected to a control device of the industrial truck (3) or is integrated into a control device of the industrial truck (3), the control device being configured to bring about an evasion manoeuvre of the industrial truck (3) as response function.

8. Industrial truck (3) according to one of Claims 1 to 7, **characterized in that** the sensors (1, 2) are designed as laser scanners.

9. Industrial truck (3) according to one of Claims 1 to 7, **characterized in that** the sensors (1, 2) are designed as radar sensors.

10. Industrial truck (3) according to one of Claims 1 to 7, **characterized in that** the sensors (1, 2) are designed as ultrasound sensors.

11. Industrial truck (3) according to one of Claims 1 to 7, **characterized in that** the sensors (1, 2) are designed as cameras.

12. Industrial truck (3) according to one of Claims 1 to 11, **characterized in that** the data processing device (6) stores protective fields in the surroundings of the industrial truck (3) that are monitored by the sensors (1, 2), wherein the data processing device (6) is configured to link and evaluate the sensor data from the sensors (1, 2) that monitor the protective fields (9) located in the direction of travel of the industrial truck (3) by way of the arithmetic-logic AND link, and to evaluate the sensor data from the sensors (1, 2) that monitor the protective fields (7, 8) located to the side of the industrial truck (3) as non-linked sensor signals.

13. Industrial truck (3) according to one of Claims 1 to 12, **characterized in that** the sensors (1, 2) are arranged in a vertical line above one another on the industrial truck (3).

14. Industrial truck (3) according to one of Claims 1 to 12, **characterized in that** the sensors (1, 2) are arranged next to one another at different heights on the industrial truck (3).

15. Industrial truck (3) according to one of Claims 1 to 14, **characterized in that** the sensors (1, 2) are structurally combined to form a sensor module having multiple scanning planes (4, 5) arranged parallel to one another.

16. Industrial truck (3) according to one of Claims 1 to 15, **characterized in that** the sensors (1, 2) are at a vertical distance of 0.01 to 0.2 m from one another.

## Revendications

1. Convoyeur au sol automatisé (3) comprenant un module de surveillance d'environnement, qui comprend au moins deux capteurs (1, 2) qui sont disposés sur le convoyeur au sol (3), qui sont conçus pour détecter l'environnement du convoyeur au sol (3) et qui effectuent chacun un balayage, notamment en ligne, dans un plan de balayage (4, 5), et un module de traitement de données (6) qui est conçu pour évaluer les données de capteur, **caractérisé en ce que** les capteurs (1, 2) sont disposés de telle sorte que les plans de balayage (4, 5) des capteurs individuels (1, 2) sont parallèles entre eux à différentes hauteurs, et le module de traitement de données (6) est conçu pour combiner et évaluer les données des capteurs individuels (1, 2) en utilisant une combinaison logique informatique ET.

2. Convoyeur au sol (3) selon la revendication 1, **caractérisé en ce que** le module de traitement de données (6) est conçu pour déclencher une fonction de réaction lorsqu'il résulte de l'évaluation de la combinaison logique informatique ET des données des capteurs (1, 2) que les capteurs individuels (1, 2) détectent simultanément un objet dans la même direction.

3. Convoyeur au sol (3) selon la revendication 2, **caractérisé en ce que** le module de traitement de données (6) est relié fonctionnellement à un module d'avertissement du convoyeur au sol (3), qui est conçu pour délivrer un message d'avertissement comme fonction de réaction.

4. Convoyeur au sol (3) selon la revendication 3, **caractérisé en ce que** le module d'avertissement est conçu comme un dispositif de signalisation optique, notamment comme un module lumineux clignotant ou un gyrophare.

5. Convoyeur au sol (3) selon la revendication 3 ou 4, **caractérisé en ce que** le module d'avertissement est conçu comme un dispositif de signalisation acoustique, en particulier comme un module formant klaxon ou un module formant sirène.

6. Convoyeur au sol (3) selon l'une des revendications 2 à 5, **caractérisé en ce que** le module de traitement de données (6) est relié fonctionnellement à un module de commande du convoyeur au sol (3), ou est intégré dans un module de commande du convoyeur au sol (3), qui est conçu pour provoquer, comme fonction de réaction, l'arrêt du convoyeur au sol (3) .

7. Convoyeur au sol (3) selon l'une des revendications 2 à 6, **caractérisé en ce que** le module de traitement de données (6) est relié fonctionnellement à un module de commande du convoyeur au sol (3), ou est intégré dans un module de commande du convoyeur au sol (3), qui est conçu pour provoquer, comme fonction de réaction, le déport du convoyeur au sol (3).

8. Convoyeur au sol (3) selon l'une des revendications 1 à 7, **caractérisé en ce que** les capteurs (1, 2) sont conçus sous forme de scanners à laser.

9. Convoyeur au sol (3) selon l'une des revendications 1 à 7, **caractérisé en ce que** les capteurs (1, 2) sont conçus comme des capteurs radar.

10. Convoyeur au sol (3) selon l'une des revendications 1 à 7, **caractérisé en ce que** les capteurs (1, 2) sont conçus comme des capteurs à ultrasons.

11. Convoyeur au sol (3) selon l'une des revendications 1 à 7, **caractérisé en ce que** les capteurs (1, 2) sont conçus corne des caméras.

12. Convoyeur au sol (3) selon l'une des revendications 1 à 11, **caractérisé en ce que** des zones de protection, surveillées par les capteurs (1, 2), dans l'environnement du convoyeur au sol (3) sont mémorisées dans le module de traitement de données (6), le module de traitement de données (6) étant conçu pour combiner et évaluer les données des capteurs (1, 2), qui surveillent les zones de protection (9) situées dans la direction de déplacement du convoyeur au sol (3), en utilisant la combinaison logique informatique ET, et pour évaluer les données des capteurs (1, 2), qui surveillent les zones de protection (7, 8) situées sur le côté du convoyeur au sol (3), comme signaux de capteur non combinés.

13. Convoyeur au sol (3) selon l'une des revendications 1 à 12, **caractérisé en ce que** les capteurs (1, 2) sont disposés les uns au-dessus des autres sur le convoyeur au sol (3) suivant une ligne verticale.

14. Convoyeur au sol (3) selon l'une des revendications 1 à 12, **caractérisé en ce que** les capteurs (1, 2) sont disposés les uns à côté des autres sur le convoyeur au sol (3) à des hauteurs différentes.

15. Convoyeur au sol (3) selon l'une des revendications 1 à 14, **caractérisé en ce que** les capteurs (1, 2) sont combinés structurellement pour former une unité de capteurs qui présente plusieurs plans de balayage (4, 5) disposés parallèlement entre eux.

16. Convoyeur au sol (3) selon l'une des revendications 1 à 15, **caractérisé en ce que** les capteurs (1, 2) sont à une distance verticale les uns des autres de 0,01 à 0,2 m.
